## Europäisches Patentamt
## European Patent Office
## Office européen des brevets

(19)

(11) Numéro de publication : **0 294 268 B1**

(12)

# FASCICULE DE BREVET EUROPEEN

(45) Date de publication du fascicule du brevet :
27.03.91 Bulletin 91/13

(51) Int. Cl.⁵ : **B60R 22/20**

(21) Numéro de dépôt : 88401241.0

(22) Date de dépôt : 20.05.88

(54) **Mécanisme de maintien à position modifiable pour sangle de ceinture de sécurité.**

(30) Priorité : 27.05.87 FR 8707506

(43) Date de publication de la demande :
07.12.88 Bulletin 88/49

(45) Mention de la délivrance du brevet :
27.03.91 Bulletin 91/13

(84) Etats contractants désignés :
DE ES GB IT SE

(56) Documents cités :
EP-A- 0 133 572
DE-A- 3 116 909

(73) Titulaire : ECIA - EQUIPEMENTS ET
COMPOSANTS POUR L'INDUSTRIE
AUTOMOBILE
F-25400 Audincourt (Doubs) (FR)

(72) Inventeur : Escaravage, Gérard
5 Impasse des Graverots
F-25700 Valentigney (FR)

(74) Mandataire : Mestre, Jean et al
c/o CABINET LAVOIX 2, place d'Estienne
d'Orves
F-75441 Paris Cédex 09 (FR)

## Revendications

La présente invention est relative aux ceintures de sécurité pour véhicules de transport de passagers notamment terrestres et a pour objet plus particulièrement, un mécanisme perfectionné de maintien pour sangle de ceinture de sécurité à position modifiable destiné à être fixé à une structure.

Comme on le sait, pour des raisons de sécurité, les véhicules de transport de passagers sont, habituellement, pourvus de sièges équipés de ceintures de sécurité. C'est par exemple le cas des aéronefs et des véhicules automobiles.

Pour les véhicules automobiles terrestres, on utilise, habituellement, des ceintures de sécurité à deux ou trois points d'ancrage. Lorsqu'on utilise une ceinture de sécurité à trois points d'ancrage, la sangle comprend un brin ventral et un brin pectoral qui traverse la poitrine du porteur à la manière d'une courroie de baudrier.

Lorsqu'on se sert d'une ceinture de sécurité de ce dernier type, le brin pectoral occupe une position, par rapport à son porteur, qui est fonction, à la fois, de la morphologie de celui-ci, de la géométrie du véhicule et du siège et, aussi, de l'état de fatigue de ce dernier. Dans ces conditions, le brin pectoral peut se trouver, dans certains cas, au niveau du cou du porteur. On comprend donc qu'en cas de collision violente, la ceinture de sécurité étant immobilisée sous la commande d'un détecteur d'inertie, le corps du passager se trouve violemment projeté en avant et son cou rencontre la sangle qui peut alors se comporter non plus comme un moyen de sécurité mais comme un objet particulièrement dangereux. En effet, on a pu observer, dans certains cas de collision, des lésions graves du cou provoquées par la ceinture de sécurité et, plus particulièrement, son brin pectoral.

C'est pourquoi on a déjà proposé de faire en sorte que le point d'amarrage supérieur du brin pectoral soit de position réglable pour tenir compte de la morphologie du porteur comparée à la configuration du véhicule.

Différents dispositifs ont déjà été proposés.

Très souvent ils sont d'une configuration telle que le point d'amarrage supérieur du brin pectoral peut occuper des positions multiples situées à l'intérieur d'un domaine dont l'amplitude tient compte des morphologies extrêmes d'un population, comparées à sa moyenne.

Ces dispositifs, qui sont parfois motorisés, sont d'une très grande complication. Ils font très souvent appel à des mécanismes du type vis et écrou qui permet donc de faire varier progressivement la position du point d'amarrage supérieur du brin pectoral.

D'autres modes de réalisation font appels à des cliquets et à des trous par rapport auxquels se déplacent des mécanismes à chariot mobile.

Parmi ces diverses solutions figure celle qui fait l'objet du document EP-A-0 133 572 et dont les éléments essentiels sont énumérés dans le préambule de la revendication principale.

On comprend donc que tous ces dispositifs sont compliqués et, de ce fait peu fiables et d'un coût relativement élevé.

L'invention se propose de réaliser un mécanisme de maintien pour sangle de ceinture de sécurité à position modifiable perfectionné qui ne présente pas tous ces inconvénients et qui soit relativement simple et d'un coût de fabrication et de mise en place relativement modique.

L'invention a pour objet un mécanisme perfectionné de maintien pour sangle de ceinture de sécurité à position modifiable qui est destiné à être fixé à une structure et qui est constitué, entre autres, d'un boîtier d'un verrou et d'un support de sangle.

Ce mécanisme qui est d'un type exposé dans le préambule de la revendication principale, présente des particularités qui figurent notamment dans la partie caractérisante de celle-ci.

D'autres caractéristiques de l'invention ressortiront de la lecture de la description et des revendications qui suivent, et de l'examen du dessin annexé, donné uniquement à titre d'exemple, où :

– la Fig. 1 est une vue de face schématique d'un mode de réalisation d'un mécanisme selon l'invention ; et

– la Fig. 2 est une coupe longitudinale de la Fig. 1.

Les ceintures de sécurité et les agencements destinés à leur montage, en particulier les ceintures de sécurité pour véhicules automobiles terrestres, étant bien connus dans la technique, la description qui suit sera limitée à ce qui concerne directement ou indirectement l'invention. Pour le reste le spécialiste du secteur technique considéré puisera dans les solutions classiques à sa disposition pour faire face aux problèmes particuliers qu'il a à résoudre.

Comme on le voit sur les figures du dessin, l'invention concerne un mécanisme de maintien pour sangle de ceinture de sécurité, à position modifiable, destiné à être fixé à une structure ou coque 50 d'un véhicule. Plus particulièrement, la partie de structure considérée est le pilier central ou montant médian qui sépare habituellement les portes latérales avant et arrière d'un véhicule à quatre portières. Pour des raisons qui apparaîtront par la suite, on a ménagé dans la structure un logement 51 et un trou 52 qui serviront au montage et à la fixation du mécanisme suivant l'invention.

Le mécanisme perfectionné pour sangle de ceinture de sécurité à position modifiable suivant l'invention comprend, essentiellement, un boîtier 10, un verrou 20 et un support de sangle 30.

Comme illustré le boîtier 10 se compose d'un pourtour 11 et d'une façade 12.

Le pourtour 11 comprend des faces d'extrémités 111 avec une embase d'ancrage faite d'un rebord 1111 et d'un trou 1112. Ces rebords forment une embase d'ancrage. Ce pourtour comprend aussi des faces latérales 112.

La façade 12 est percée d'une fente longitudinale 121 et porte un guide 122. Dans ce boîtier 10, est monté le verrou 20.

Le verrou 20 comprend essentiellement une gâche 21, un pêne 22, un ressort 23 et un poussoir 24.

La gâche 21 se compose d'un levier 210 pourvu, dans une zone médiane, d'un épaulement 211 transversal et d'une articulation 212 sur le boîtier. Par exemple, cette articulation est faite de pattes latérales 2120 qui donnent à la gâche une configuration en T inversé quand on regarde la vue de face du mécanisme selon l'invention. Ces deux pattes latérales sont engagées dans des encoches 1120 pratiquées dans les faces latérales 112 du boîtier 10, comme illustré. De préférence, l'épaulement 211 est fait d'un repli ou analogue pratiqué sur la longueur du levier 210.

Le pêne 22 se compose par exemple, d'une tige 220 à collerette 221 engagée dans la fente 121 du boîtier et dans un orifice 33 du support de sangle comme cela apparaît à l'examen du dessin. La collerette est, de préférence, carrée.

Le ressort 23 se présente, par exemple, sous la forme d'une lame 230, de configuration générale en U évasé, pourvue à peu près dans sa zone médiane d'éléments de maintien de la gâche 231, tels que des ailes recourbées, 231.

Le poussoir 24 se présente à la manière d'un bouton dont le fût 240 se termine par un appui 241. Comme on le voit, ce poussoir est engagé directement ou non dans le guide 122 et son appui 241 repose sur l'extrémité du levier 210 de la gâche 21 qui est opposée à celle où se trouve l'articulation 212 avec le boîtier.

Le support de sangle 30 comprend un corps 31 où se trouvent ménagés un passage 32 pour la sangle et l'orifice 33 destiné à recevoir des moyens de retenue. Comme on le voit, ces moyens de retenue sont, par exemple, un écrou vissé sur l'extrémité taraudée de la tige 220 du pêne 22. Cette extrémité taraudée ménage un épaulement de manière que lorsque l'écrou est serré le pêne puisse coulisser facilement dans la fente 121 et de manière que le support de sangle puisse tourner autour de la tige 220 de la collerette, comme cela apparaît sur les figures.

Les raisons pour lesquelles un degré de liberté angulaire est conféré au support de sangle apparaîtront par la suite.

Le boîtier 10, le verrou 20 et le support de sangle 30 du mécanisme suivant l'invention sont montés et assemblés comme il apparaît sur le dessin. En particulier, on observe que grâce à la configuration et à la manière dont le ressort est placé celui-ci assure le maintien de la gâche relativement au boîtier et assure aussi normalement sa sollicitation dans une position d'enclenchement où la collerette 221 de la tige 220 du pêne 22 peut être retenue par l'épaulement 211 formé par le repli du levier 210 de la gâche 21. En outre, ce ressort applique l'extrémité du levier de gâche opposée à l'articulation 212 contre l'appui 241 du poussoir 24 engagé dans le guide.

On suppose qu'après assemblage et montage, le mécanisme suivant l'invention occupe la position illustrée sur les figures du dessin. Le support de sangle occupe donc l'extrémité supérieure de la fente ménagée dans la façade du boîtier. Si l'on souhaite abaisser la position du point d'ancrage de la sangle, on presse alors sur le poussoir 24 ce qui repousse la gâche 21 à l'opposé de la façade du boîtier. L'épaulement 211 de la gâche se sépare alors de la collerette 221 de la tige 220 du pêne 22 qu'il libère et le pêne est alors libre de coulisser dans la fente 121, vers l'extrémité inférieure de celle-ci. Lorsqu'on relâche le poussoir, le ressort rappelle la gâche vers la façade du boîtier.

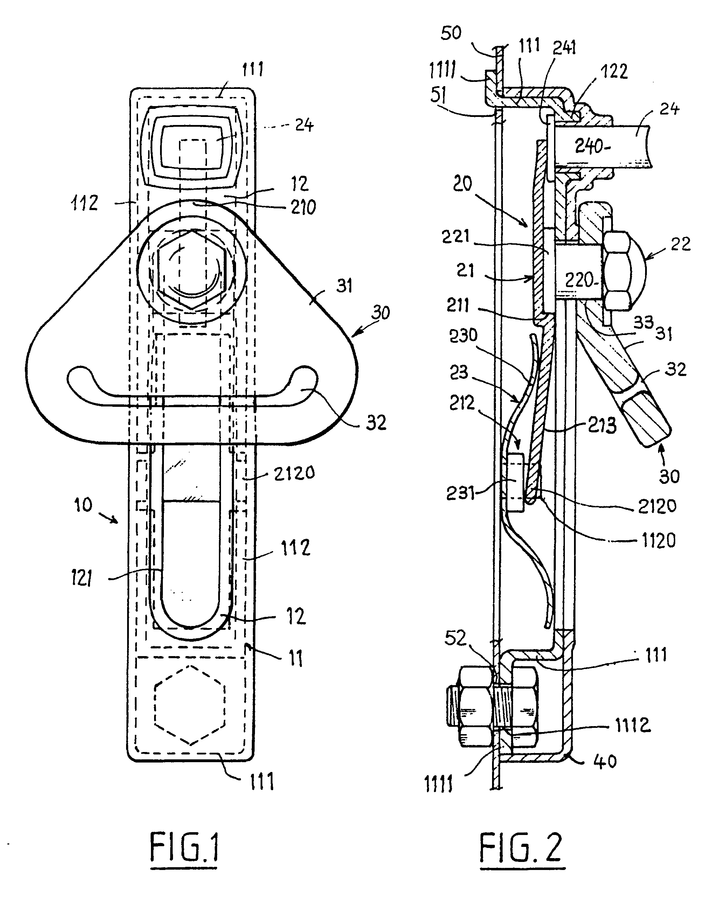

On voit donc que grâce au mécanisme suivant l'invention, on peut donner au support de sangle deux positions distinctes, une position haute, comme illustré, et une position basse lorsque le pêne occupe le fond de la fente du boîtier. En examinant la Fig.2, on voit que le levier 210 de la gâche 21 présente une rampe 213 oblique, inclinée en direction de la façade du boîtier. Cette rampe est située entre l'articulation 212 et l'épaulement 211.

Si le support de sangle se trouve à l'extrémité inférieure de la fente et qu'on souhaite le placer dans sa position haute, il suffit alors de saisir le support de sangle et de le faire glisser dans la fente du boîtier en direction de son extrémité supérieure. La colerette 221 de la tige 220 du pêne 22 rencontre alors, au cours de son déplacement, la rampe 213 de la gâche qu'elle repousse à l'encontre de la sollicitation du ressort jusqu'à ce qu'elle échappe à l'épaulement 211. Dès que cette collerette a franchi cet épaulement, la gâche est rappellée en direction de la façade du boîtier par le ressort et le pêne se trouve alors verrouillé en position haute.

Dans le mode de réalisation dessiné, le mécanisme suivant l'invention ne comprend que deux positions possibles pour le support 30. On comprend qu'il est aisé de ménager des positions intermédiaires. Pour ce faire, il suffit, par exemple, de déplacer vers le bas du boîtier l'articulation de la gâche sur celui-ci et de ménager des épaulements intercalaires entre l'extrémité de la gâche qui coopère avec le poussoir et l'extrémité où se trouve l'articulation de la gâche avec le boîtier. La gâche se présente alors à la manière d'un levier où se trouve une succession de gradins séparés par une succession de rampes.

Pour assembler le mécanisme selon l'invention à la structure d'un véhicule, il suffit d'engager le rebord 1111 dans le logement 51 et après avoir mis en regard

le trou 52 et le trou 1112 d'y mettre des moyens de fixation tels qu'une vis et un écrou, comme représenté. Ce montage fait, pour donner une meilleure présentation à l'ensemble on lui associe un habillage 40 par exemple, en matière plastique moulée. Il suffit alors de dévisser l'écrou qui est serré sur l'extrémité de la tige 220 du pêne 22 pour retirer le support de sangle 30, et l'habillage est mis alors en place ; on fixe le support de sangle en remettant en place l'écrou illustré et non référencé.

On voit tous les avantages qu'offre ce mécanisme du fait de sa simplicité de construction qui ne comprend que très peu de constituants.

## Revendications

1. Mécanisme de maintien à position modifiable pour sangle de ceinture de sécurité destiné à être fixé à une structure et constitué, entre autres, d'un boîtier (10) muni d'une pourtour (11) avec une embase d'ancrage et une façade (12) percée d'une fente (121), d'un verrou (20) muni d'un poussoir (24) accessible de l'extérieur et, associé à un support de sangle (30), d'un pêne (22) déplaçable et engagé dans la fente (121), caractérisé en ce que la façade (12) comprend un guide (122) et en ce que le verrou (20) comprend le poussoir (24) qui est monté mobile dans le guide (122), une gâche (21) mobile articulée sur le boîtier (10) et coopérant avec le pêne (22) et commandée par le poussoir (24), ainsi qu'un ressort (23) agencé pour solliciter la gâche (21) en direction du poussoir (24) et du boîtier (10).

2. Mécanisme suivant la revendication 1, caractérisé en ce que le pourtour (11) présente deux faces extrêmales (111) munies chacune d'un rebord (1111) dont au moins un est percé d'un trou (1112).

3. Mécanisme selon la revendication 1 ou 2, caractérisé en ce que le ressort (23) est une lame (230) qui présente au voisinage de son milieu des éléments de maintien (231) de la gâche (21).

4. Mécanisme selon la revendication 3, caractérisé en ce que les éléments de maintien (231) sont des ailes recourbées.

5. Mécanisme selon l'une quelconque des revendications 1 à 4, caractérisé en ce que la gâche (21) est un levier (210) muni sur sa longueur d'un épaulement (211) coopérant avec le pêne (22).

6. Mécanisme selon l'une quelconque des revendications 1 à 5, caractérisé en ce que le pourtour (11) du boîtier (10) présente deux faces latérales (112) pourvues d'encoches (1120) et en ce que la gâche (21) est munie de pattes (2120) latérales engagées dans ces encoches (1120) pour constituer une articulation (212).

7. Mécanisme selon la revendication 6, caractérisé en ce que ces pattes latérales (2120) sont disposées à celles des extrémités de la gâche (21) qui est opposée à celle qui coopère avec le poussoir (24).

8. Mécanisme selon l'une quelconque des revendications 3 à 7, caractérisé en ce que les éléments de maintien (231) reposent sur les pattes latérales de la gâche (21).

9. Mécanisme selon l'une quelconque des revendications 1 à 8, caractérisé en ce que le pêne (22) est constitué d'une tige (220) munie d'une collerette (221) qui coopère avec la gâche (21).

10. Mécanisme selon l'une quelconque des revendications 5 à 9, caractérisé en ce que l'épaulement (211) de la gâche (21) est destiné à retenir la collerette (221) de la tige (220) du pêne (22).

11. Mécanisme selon l'une quelconque des revendications 1 à 10, caractérisé en ce que l'embase d'ancrage prend appui sur la structure.

12. Mécanisme selon l'une quelconque des revendications 2 à 11, caractérisé en ce que l'embase d'ancrage est constitué par les rebords (1111) dont l'un est destiné à être engagé dans un logement (51) de la structure (50) et dont l'autre est percé d'un trou (1112) destiné à être mis en regard avec un trou (52) de la structure.

## Ansprüche

1. Sicherheitsgurt-Haltemechanismus mit verstellbarer Position zur Anbringung an einem Aufbau und gebildet, unter anderem, durch ein Gehäuse (10), welches mit einer Randfläche (11) mit einer Verankerungsfläche und mit einer von einem Schlitz (121) durchsetzten Vorderseite (12) versehen ist, eine Verriegelung (20), welche mit einem von außen zugänglichen Drücker (24) und, zugeordnet zu einem Gurtträger (30), mit einem versetzbaren und in dem Schlitz (121) aufgenommenen Riegel (22) versehen ist, dadurch gekennzeichnet, daß die Vorderseite (12) eine Führung (122) umfaßt und daß die Verriegelung (20) den Drücker (24), welcher in der Führung (122) beweglich angebracht ist, eine am Gehäuse (10) angelenkte und mit dem Riegel (22) zusammenwirkende und durch den Drücker (24) gesteuerte bewegliche Raste (21) sowie eine die Raste (21) in Richtung auf den Drücker (24) und das Gehäuse (10) belastend eingerichtete Feder (23) umfaßt.

2. Mechanismus nach Anspruch 1, dadurch gekennzeichnet, daß die Randfläche (11) zwei Endflächen (111) aufweist, von denen jede mit einer Krempe (1111) versehen ist, von denen wenigstens eine von einem Loch (1112) durchsetzt ist.

3. Mechanismus nach Anspruch 1 oder 2, dadurch gekennzeichnet, daß die Feder (23) ein Blatt (230) ist, welches im Bereich seiner Mitte Halteelemente (231) für die Raste (21) aufweist.

4. Mechanismus nach Anspruch 3, dadurch gekennzeichnet, daß die Halteelemente (231) abgebogene Flügel sind.

5. Mechanismus nach irgendeinem der Ansprüche 1 bis 4, dadurch gekennzeichnet, daß die Raste (21) ein Hebel (210) ist, welcher auf seiner Länge mit einer mit dem Riegel (22) zusammenwirkenden Schulter (211) versehen ist.

6. Mechanismus nach irgendeinem der Ansprüche 1 bis 5, dadurch gekennzeichnet, daß die Randfläche (11) des Gehäuses (10) zwei mit Aussparungen (1120) versehene Seitenflächen (112) aufweist und daß die Raste (21) mit seitlichen Lappen (2120) versehen ist, welche zur Bildung eines Gelenks (212) in die Aussparungen (1120) eingesetzt sind.

7. Mechanismus nach Anspruch 6, dadurch gekennzeichnet, daß die seitlichen Lappen (2120) bei demjenigen der Enden der Raste (21) liegen, das dem mit dem Drücker (24) zusammenwirkenden gegenüberliegt.

8. Mechanismus nach irgendeinem der Ansprüche 3 bis 7, dadurch gekennzeichnet, daß die Halteelemente (231) auf den seitlichen Lappen der Raste (21) aufruhen.

9. Mechanismus nach irgendeinem der Ansprüche 1 bis 8, dadurch gekennzeichnet, daß der Riegel (22) durch einen mit einem mit der Raste (21) zusammenwirkenden Kragen (221) versehenen Bolzen (220) gebildet ist.

10. Mechanismus nach irgendeinem der Ansprüche 5 bis 9, dadurch gekennzeichnet, daß die Schulter (211) der Raste (21) für ein Festhalten des Kragens (221) des Bolzens (220) des Riegels (22) bestimmt ist.

11. Mechanismus nach irgendeinem der Ansprüche 1 bis 10, dadurch gekennzeichnet, daß die Verankerungsfläche am Aufbau anliegt.

12. Mechanismus nach irgendeinem der Ansprüche 2 bis 11, dadurch gekennzeichnet, daß die Verankerungsfläche durch die Krempen (1111) gebildet ist, von denen die eine für ein Einsetzen in eine Aufnahme (51) des Aufbaus (50) bestimmt ist und die andere von einem Loch (1112) durchsetzt ist, welches für eine fluchtende Anordnung mit einem Loch (52) des Aufbaus bestimmt ist.

## Claims

1. A mechanism for keeping the strap of a safety belt in an adjustable position, intended to be fastened to a structure and constituted, inter alia, by a casing (10) provided with a surround (11) with an anchorage base and a front (12) penetrated by a slot (121), with a latch (20) provided with a push button (24) accessible from the outside and, associated with a strap support (30), a displaceable bolt (22) engaged in the slot (121), characterized in that the front (12) comprises a guide (122) and in that the latch (20) comprises the push button (24) movably mounted in the guide (122), a movable keeper (21) articulated to the casing (10) and cooperating with the bolt (22) and controlled by the push button (24), as well as a spring (23) arranged to bias the keeper (21) towards the push button (24) and the casing (10).

2. A mechanism according to claim 1, characterized in that the surround (11) has two end faces (111) each provided with a flange (1111), at least one of which is penetrated by a hole (1112).

3. A mechanism according to claim 1 or 2, characterized in that the spring (23) is a blade (230) having near its centre, elements (231) for keeping the keeper (21) in position.

4. A mechanism according to claim 3, characterized in that the supporting elements (231) are bent back strips.

5. A mechanism according to any one of claims 1 to 4, characterized in that the keeper (21) is a lever provided over its length with a shoulder (211) cooperating with the bolt (22).

6. A mechanism according to any one of claims 1 to 5, characterized in that the surround (11) of the casing (10) has two lateral faces 112 provided with notches (1120) and in that the keeper (21) is provided with lateral tabs (2120) engaged in these notches (1120) so as to constitute an articulation (212).

7. A mechanism according to claim 6, characterized in that these lateral tabs (2120) are disposed at that end of the keeper (21) that is remote from that cooperating with the push button (24).

8. A mechanism according to any one of claims 3 to 7, characterized in that the supporting elements (231) rest on the lateral tabs of the keeper (21).

9. A mechanism according to any one of claims 1 to 8, characterized in that the bolt (22) is constituted by a shank (220) provided with a flange (221) that cooperates with the keeper (21).

10. A mechanism according to any one of claims 5 to 9, characterized in that the shoulder (211) of the keeper (21) is intended to retain the flange (221) of the pin (220) of the bolt (22).

11. A mechanism according to any one of claims 1 to 10, characterized in that the anchorage base bears on the structure.

12. A mechanism according to any one of claims 2 to 11, characterized in that the anchorage base is constituted by the flanges (1111), one of which is intended to be engaged in a recess (51) of the structure (50) and the other of which is penetrated by a hole (1112) intended to be aligned with a hole (52) of the structure.

FIG.1

FIG.2